# EUROPEAN PATENT APPLICATION

(11) **EP 2 570 302 A2**
(43) Date of publication of application: **20.03.2013**
(21) Application number: 12006117.1
(22) Date of filing: 29.08.2012
(51) Int. Cl.: B60Q 1/14

(54) **Vehicular light automatic control device**

(30) Priority: 13.09.2011 JP 2011198983
(71) Applicant: Niles Co., Ltd., Tokyo 143-8521 (JP)
(72) Inventor: Yamaguchi, Satoshi, Ota-ku Tokyo, 143-852 (JP)
(74) Representative: Oppermann, Frank

(57) **Abstract**

A vehicular light automatic control device is provided with a forward illuminance sensor 2 for detecting illuminance forward of a vehicle, an upward illuminance sensor 3 for detecting illuminance upward of the vehicle, and a control unit 4 for controlling an ON/OFF operation of a vehicular light based upon the illuminance forward of the vehicle and the illuminance upward of the vehicle. The vehicular light automatic control device is provided with a time zone determining unit 44 for determining whether or not a present time is in a time zone of nightfall, wherein when it is determined that the present time is in the time zone of nightfall, the control unit prohibits an OFF operation of the vehicular light afterwards.

## Description

### CROSS-REFERENCE TO RELATED APPLICATION

This application claims priority under 35 USC 119 from Japanese Patent Application No. 198983/2011 filed on September 13, 2011, the disclosure of which is incorporated by reference herein.

### BACKGROUND OF THE INVENTION

### Field of the Invention

The present invention relates to a vehicular light automatic control device for automatically controlling an ON/OFF operation of a vehicular light in accordance with illuminance in the vehicular surroundings.

### Description of the Related Art

There are proposed various kinds of control devices for automatically controlling an ON/OFF operation of a vehicular light, and for example, Japanese Patent Laid-Open Publication No. 62-253540 disclose one of the control devices.

For example, the control device disclosed in Japanese Patent Laid-Open Publication No. 62-253540 is provided with a forward illuminance sensor for detecting illuminance forward of a vehicle and an upward illuminance sensor for detecting illuminance upward of the vehicle, wherein when a light switch is operated in an automatic mode, the ON/OFF operation of the vehicular light is controlled based upon output signals from both of the sensors.

In this control device, for example, in a case where the illuminance shown by the output signal from the forward illuminance sensor is substantially equal to that from the upward illuminance sensor, each of which is higher than a predetermined threshold, the control device determines that the present time is a daytime, and then turns the vehicular light into an OFF-state. On the other hand, in a case where the illuminance shown by the output signal from the forward illuminance sensor is substantially equal to that from the upward illuminance sensor, each of which is lower than a predetermined threshold, the control device determines that the present time is a nighttime, and then turns the vehicular light into an ON-state. Further, in a case where the illuminance shown by the output signal from the forward illuminance sensor is different from that from the upward illuminance sensor, wherein the illuminance forward of the vehicle is higher than a predetermined threshold, and the illuminance upward of the vehicle is lower than the predetermined threshold, the control device determines that the present time is a daytime when a vehicle travels in darkness under the elevated road, and then turns the vehicular light into an OFF-state.

The ON control for a vehicular light using two sensors is, as compared to the ON control for a vehicular light using one sensor, advantageous in a point where the vehicular light is made to switch on in a tunnel and is made to switch off under an elevated road, and provides the ON control for the vehicular light without giving a feeling of strangeness to a driver.

In contrast, the OFF control for a vehicular light is structured such that, in a case where a state where the illuminance upward of a vehicle and the illuminance forward of the vehicle are respectively higher than a threshold illuminance for determining an OFF operation of the vehicular light lasts for more than a predetermined determination time, the vehicular light switches off. Therefore even if the determination time is attempted to be set to a longer time for improving accuracy of the OFF determination of the vehicular light, the determination time becomes a few seconds at the longest in consideration of responsiveness in control for the vehicular light.

Therefore in a case of the control device in Japanese Patent Laid-Open Publication No. 62-253540, a driver may possibly have a feeling of strangeness in the ON/OFF control of the vehicular light in some particular situation. For example, after the vehicular light-ON operation at nightfall, when the detection illumination in the vehicular surroundings (forward and upward of the vehicle) temporarily exceeds threshold illuminance for vehicular light-OFF due to influences of artificial vehicular light such as an illumination or clouds, the vehicular light switches off, and afterwards when the influences of artificial vehicular light such as an illumination or clouds disappear, the detection illumination in the vehicular surroundings returns back to an original state, and then the vehicular light may possibly again switch on.

Further, at nightfall at the time the detection illuminance forward of a vehicle is lower than the threshold illuminance, beyond which the vehicular light should switch off, due to an influence of shade and the detection illuminance upward of the vehicle is slightly higher than the threshold illuminance beyond which the vehicular light should switch off, when a vehicle travels under an elevated road or into a tunnel, the upward illuminance is temporarily lower than the threshold illuminance under which the vehicular light should switch on, and therefore the vehicular light is made to switch on. When the vehicle passes under the elevated road or in the tunnel and afterwards the upward illuminance is illuminance exceeding the threshold illuminance beyond which the vehicular light should switch off, as the forward direction of the vehicle becomes in agreement with a direction of the sun, the forward detection illuminance also exceeds the threshold illuminance beyond which the vehicular light should switch off, and the vehicular light is made to switch off. In this case, afterwards until the sunset comes and the detection illuminance in the vehicular surroundings (forward and upward of the vehicle) becomes lower than the threshold illuminance under which the vehicular light should switch on, the vehicular light continues to be in an OFF-state.

In this manner, in some cases the vehicular light which has been ON at nightfall or the like temporarily switches off, and therefore in this case, a driver may possibly have a feeling of strangeness in control of the ON/OFF operation of the vehicular light.

### SUMMARY OF THE INVENTION

Accordingly, the present invention is made in view of the above described problems, and an object of the present invention is to provide a vehicular light automatic control device which does not cause a feeling of strangeness to a driver at control of an ON/OFF operation of a vehicular light in a particular situation.

For this purpose, according to an aspect of the present invention, a vehicular light automatic control device comprises a forward illuminance detecting unit configured to receive light from the forward side of a vehicle for detecting illuminance forward of the vehicle, an upward illuminance detecting unit configured to receive light from the upward side of the vehicle for detecting illuminance upward of the vehicle, and a vehicular light ON/OFF control unit configured to control an ON/OFF operation of the vehicular light based upon the illuminance forward of the vehicle and the illuminance upward of the vehicle, further comprising:
a time zone determining unit configured to determine whether or not a present time is in a time zone of nightfall, based upon the illuminance upward of the vehicle, wherein
when the time zone is determined as the nightfall, the vehicular light ON/OFF control unit prohibits the OFF operation of the vehicular light afterwards.

According to the aspect of the present invention, when the time zone is determined as the nightfall, the vehicular light ON/OFF control unit prohibits the OFF operation of the vehicular light afterwards. Therefore even if the detection illuminance in the vehicular surroundings temporarily exceeds the threshold illuminance for performing the OFF operation of the vehicular light, it prevents the vehicular light from switching off. In consequence, for example, after the vehicular light-ON operation at nightfall, when the detection illumination in the vehicular surroundings temporarily exceeds the threshold illuminance for vehicular light-OFF due to influences of artificial vehicular light such as an illumination or clouds, the vehicular light can be prevented from switching off. Therefore a feeling of strangeness which a driver may have in control of the ON/OFF operation of a vehicular light in a particular situation can be reduced.

### BRIEF DESCRIPTION OF THE DRAWINGS

Other objects, features, and advantages of the present invention will become more apparent from the following detailed description made with reference to the accompanying drawings, in which like parts are designated by like reference numbers and in which:

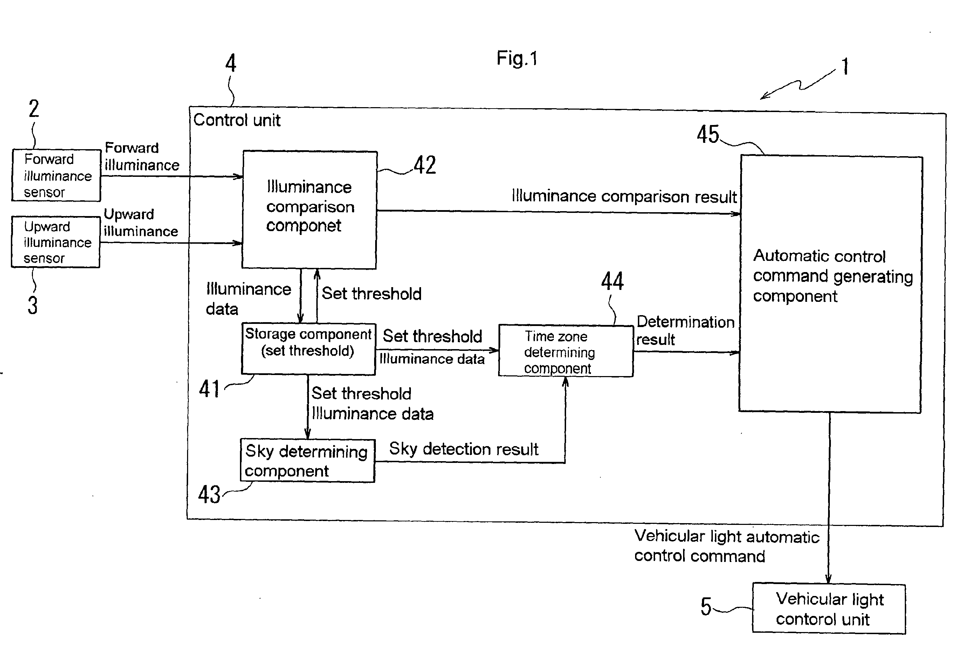

FIG. 1 is a block diagram showing a vehicular light automatic control device according to an embodiment in the present invention;
FIG. 2 is a flow chart showing time zone determining processing executed in the vehicular light automatic control device according to the embodiment;
FIG. 3 is a flow chart showing the time zone determining processing executed in the vehicular light automatic control device according to the embodiment;
FIG. 4 is a flow chart showing vehicular light automatic control command generating processing executed in the vehicular light automatic control device according to the embodiment;
FIG. 5A is a time chart showing a change in each of upward illuminance and forward illuminance according to the embodiment;
FIG. 5B is a time chart explaining vehicular light automatic control according to the embodiment;
FIG. 6A is a time chart showing a change in each of upward illuminance and forward illuminance according to the conventional example; and
FIG. 6B is a time chart explaining vehicular light automatic control according to the conventional example.

### DESCRIPTION OF THE PREFERRED EMBODIMENTS

Hereinafter, a vehicular light automatic control device according to an embodiment in the present invention will be explained with reference to the accompanying drawings.

A vehicular light automatic control device 1 is provided with a forward illuminance sensor 2, an upward illuminance sensor 3, a control unit 4, and a vehicular light control unit 5.

The forward illuminance sensor 2 receives light incident from the forward side of a vehicle by a vehicular light receiving element (not shown) to output a signal showing brightness forward of the vehicle (forward illuminance Lf) to the control unit 4.

The upward illuminance sensor 3 receives light incident from the upward side of a vehicle by a vehicular light receiving element (not shown) to output a signal showing luminance upward of the vehicle (upward illuminance Lu) to the control unit 4.

The forward illuminance sensor 2 and the upward illuminance sensor 3 are sensors each having sensibility for a visible vehicular light region, and signals from the forward illuminance sensor 2 and the upward illuminance sensor 3 are continuously input to the control unit 4 while the vehicular light automatic control device is operated.

The control unit 4 is provided with a storage component 41, an illuminance comparison component 42, a sky determining component 43, a time zone determining component 44, and an automatic control command generating component 45.

The storage component 41 is formed of a ROM, a RAM and the like, and stores thresholds for determining an ON/OFF operation of a vehicular light (threshold illuminance Th0 for vehicular light-OFF, threshold illuminance Th1 for vehicular light-ON, threshold illuminance Th2 for vehicular light-off prohibition, threshold illuminance Th3 for vehicular light-OFF prohibition release, and threshold illuminance THIL1 for determining whether or not a present time is in a time zone of daytime), and the like. Further, the storage component 41 stores average values Lf_Ave and Lu_Ave of the forward illuminance Lf and the upward illuminance Lu calculated in the illuminance comparison component 42, filtering illuminance obtained from noise elimination processing of the forward illuminance Lf and the upward illuminance Lu (forward filtering illuminance and the upward filtering illuminance), and the like, as well as is provided with a region for storing ON/OFF of various kinds of flags.

The illuminance comparison component 42 obtains forward illuminance Lf and upward illuminance Lu for each predetermined time TA (sampling time) from signals input from the forward illuminance sensor 2 and the upward illuminance sensor 3 respectively, and stores the forward illuminance Lf and the upward illuminance Lu obtained, as illuminance data in the storage component 41. Further, the illuminance comparison component 42 calculates an average value Lf_Ave of the forward illuminance Lf and an average value Lu_Ave of the upward illuminance Lu during a predetermined time Tb (Tb > TA) from the forward illuminance Lf and the upward illuminance Lu for each predetermined time TA stored in the storage component 41, and stores these average values in the storage component 41.

Then, the calculated average values Lf_Ave and Lu_Ave are respectively compared with predetermined thresholds (threshold illuminance Th0 and Th1 for determining an ON/OFF operation of a vehicular light) obtained from the storage component 41, and the comparison result is outputted to the automatic control command generating component 45. Herein, a value of the threshold illuminance Th0 for an OFF operation of a vehicular light is larger (brighter) than that of the threshold illuminance Th1 for an ON operation of a vehicular light (Th0 > Th1).

According to the embodiment, in a case of switching on a vehicular light as the comparison result, a vehicular light-ON flag is set, and in a case of switching off the vehicular light as the comparison result, the vehicular light-ON flag is not set. Presence/absence of the set in the vehicular light-ON flag is outputted to the automatic control command generating component 45 as the comparison result.

Further, the illuminance comparison component 42 executes the noise elimination processing to the upward illuminance Lu obtained for each predetermined time TA, and stores the upward illuminance having been subjected to the noise elimination processing, as upward filtering illuminance UFIL in the storage component 41. It should be noted that the noise elimination processing may be executed also to the forward illuminance Lf, and the forward illuminance having been subjected to the noise elimination processing may be stored as forward filtering illuminance.

In the embodiment, first median filtering processing is executed to illuminanace data composed of upward illuminance Lu obtained for every predetermined time TA (one hundred several ten milliseconds) from signals outputted from the upward illuminance sensor 3 for each first time (T1: a few seconds) longer than the predetermined time TA for eliminating over-noises from the illuminance data. A maximum value is calculated to the illuminance data from which the over-noise is eliminated, for each second time (T2: several ten seconds) longer than the first time T1 to eliminate under-noises therefrom. Further, A minimum value is calculated to the illuminance data from which the over-noise is eliminated, for each third time (T3: several minutes) longer than the second time T2 to find the worst value in a noise elimination cycle, thus executing the filtering processing.

By this noise elimination processing, there can be obtained the illuminance data (upward filtering illuminance) in which factors causing a temporal change of the illuminance, which can be interruption of detecting an illuminance change due to nightfall or dawn, such as structures, shop illuminations and circuit noises in the surroundings during vehicle traveling, are eliminated.

The sky determining component 43 determines whether or not the sky is detected, based upon the illuminance data (forward illuminance Lf and upward illuminance Lu) stored in the storage component 41, and outputs the determination result to the time zone determining component 44. In the embodiment, presence/absence of the detection for each of tunnels, street lamps, and elevated bridges is determined based upon the forward illuminance Lf and the upward illuminance Lu. In a case where these factors are not detected, it is determined that the sky is detected.

The detection of each of the tunnel and the street lamp is determined based upon whether or not light received by the upward illuminance sensor 3 is artificial light. In a case where a vehicle travels in a tunnel or under street lamps in operation, the light received by the upward illuminance sensor 3 is artificial light from illuminations provided in the tunnel or the like. Light (artificial light) from alternate-current light such as fluorescent lamps or sodium lamps repeatedly switches on/off in a frequency of 50 to 60Hz. Therefore the illuminance of the artificial light becomes repeatedly dark or bright in a predetermined cycle H.

Therefore, for example, in a case where the light detected by the upward illuminance sensor 3 is artificial light emitted from an illumination in a tunnel, a difference between a minimum value Lu_min and an average value Lu_Ave of the upward illuminance becomes large. On the other hand, in a case of natural light like light pouring from the sky, since the natural light has no large change in illuminance, differing from the artificial light, the minimum value Lu_min and the average value Lu_Ave of the upward illuminance in the upward illuminance are substantially the same. In consequence, if the minimum value Lu_min < the average value Lu_Ave, the light detected by the upward illuminance sensor 3 is artificial light. Therefore in this case, the tunnel or the street lamp is determined to be detected.

In addition, when a vehicle travels under the elevated bridge, an average value Lf_Ave of the forward illuminance is higher than threshold illuminance Th0 for determining an OFF operation of a vehicular light and an average value Lu_Ave of the upward illuminance is lower than the threshold illuminance Th0 for determining the OFF operation of the vehicular light. Accordingly in this case, since the vehicle travels under the elevated bridge, the elevated bridge is determined to be detected.

In this manner, presence/absence of each detection for tunnels, street lamps, and elevated bridges is determined based upon whether or not the light received by the upward illuminance sensor 3 is the artificial light, the forward illuminance, and the upward illuminance. In a case where these factors are not detected, the sky determining component 43 determines that the sky is detected, and outputs the determination result to the time zone determining component 44.

In a case where the sky is detected in the sky determining component 43, the time zone determining component 44 determines which time zone of daytime, nightfall and dawn the present time corresponds to, and outputs the determination result to the automatic control command generating component 45.

Specifically the time zone determining component 44 compares the upward filtering illuminance UFIL stored in the storage component 41 with the threshold illuminance THIL1 for determining whether the present time is in a time zone of daytime. In a case where the upward filtering illuminance UFIL is equal to or more than the threshold illuminance THIL1 (UFIL ≥ THIL1), it is determined that the present time is in the time zone of daytime. Here, THIL1 is set to an illuminance value from a bright state of daytime to a starting state of nightfall.

Further, in a case where it is not determined that the present time is the daytime, the time zone determining component 44 confirms a change of the upward filtering illuminance with time (whether it increases or decreases with time). In a case where the upward filtering illuminance increases with time, the present time is determined to be in a time zone of dawn, and in a case where the upward filtering illuminance decreases with time, the present time is determined to be in a time zone of nightfall. The time zone determining component 44 outputs the determination result to the automatic control command generating component 45.

The automatic control command generating component 45 determines an ON/OFF operation of a vehicular light based upon the illuminance comparison result input from the illuminance comparison component 42 and the determination result input from the time zone determining component 44. In addition, a vehicular light automatic control command for controlling the ON/OFF operation of a vehicular light is generated based upon the determination result, which is outputted to the vehicular light control unit 5.

For example, in a case where an average value Lf_Ave of the forward illuminance and an average value Lu_Ave of the upward illuminance are respectively larger than a threshold Th1 for determining an ON operation of a vehicular light (Lf_Ave > Th1, and Lu_Ave > Th1), the present time is determined to be daytime, and the vehicular light turns into an OFF-state.

In a case where the average value Lf_Ave of the forward illuminance and the average value Lu_Ave of the upward illuminance are respectively equal to or smaller than the threshold Th1 for determining an ON operation of a vehicular light (Lf_Ave ≤ Th1, and Lu_Ave ≤ Th1), the present time is determined to be nighttime, and the vehicular light turns into an ON-state.

In the embodiment, the automatic control command generating component 45 determines an ON/OFF operation of the vehicular light mainly based upon the illuminance comparison result input from the illuminance comparison component 42, and in a case where the determination result input from the time zone determining component 44 shows that present time is in a time zone of nightfall or dawn, it is confirmed whether or not the OFF operation of the vehicular light is prohibited based upon the determination result in the time zone determining component 44, and in consideration of that confirmation, the ON/OFF operation of the vehicular light is finally determined.

For example, when a vehicular light is in an ON-state, in a case where the determination result in the time zone determining component 44 indicates that the present time is in a time zone of nightfall and the OFF operation of the vehicular light is prohibited, even if the illuminance comparison result from the illuminance comparison component 42 determines the OFF operation of the vehicular light, the vehicular light is designed to be continuously in the ON-state.

The vehicular light control unit 5 performs an ON/OFF operation of a vehicular light based upon a vehicular light automatic control command input from the automatic control command generating component 45.

Hereinafter, the processing to be executed in the vehicular light automatic control device 1 will be explained.

When an ignition switch (not shown) is switched to a power supply position and a light switch is operated in an automatic mode, the vehicular light automatic control device 1 starts to execute the processing in the control unit 4. Specifically the illuminance comparison processing is executed in the illuminance comparison component 42 based upon signals input from the forward illuminance sensor 2 and the upward illuminance sensor 3 respectively, and in parallel to this processing, the time zone determining processing is executed in the sky determining component 43 and the time zone determining component 44.

In the illuminance comparison processing, the illuminance comparison component 42 obtains forward illuminance Lf and upward illuminance Lu every predetermined time TA from signals input from the forward illuminance sensor 2 and the upward illuminance sensor 3 respectively, and stores the obtained forward illuminance Lf and upward illuminance Lu in the storage component 41. Further, the illuminance comparison component 42 calculates an average value Lf_Ave of the forward illuminance Lf and an average value Lu_Ave of the upward illuminance Lu during a predetermined time Tb (Tb > TA) from the forward illuminance Lf and the upward illuminance Lu every predetermined time TA stored in the storage component 41, and stores these calculated average values in the storage component 41.

Then, the calculated average values Lf_Ave and Lu_Ave are respectively compared with a predetermined threshold (threshold illuminance for determining an ON/OFF operation of a vehicular light) obtained from the storage component 41, and the comparison result is outputted to the automatic control command generating component 45.

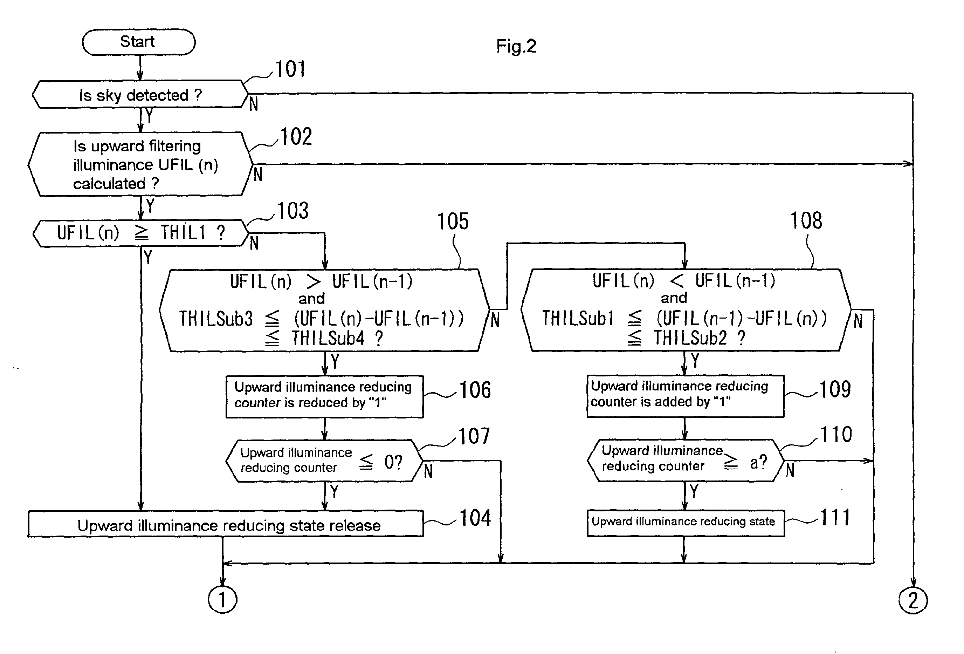

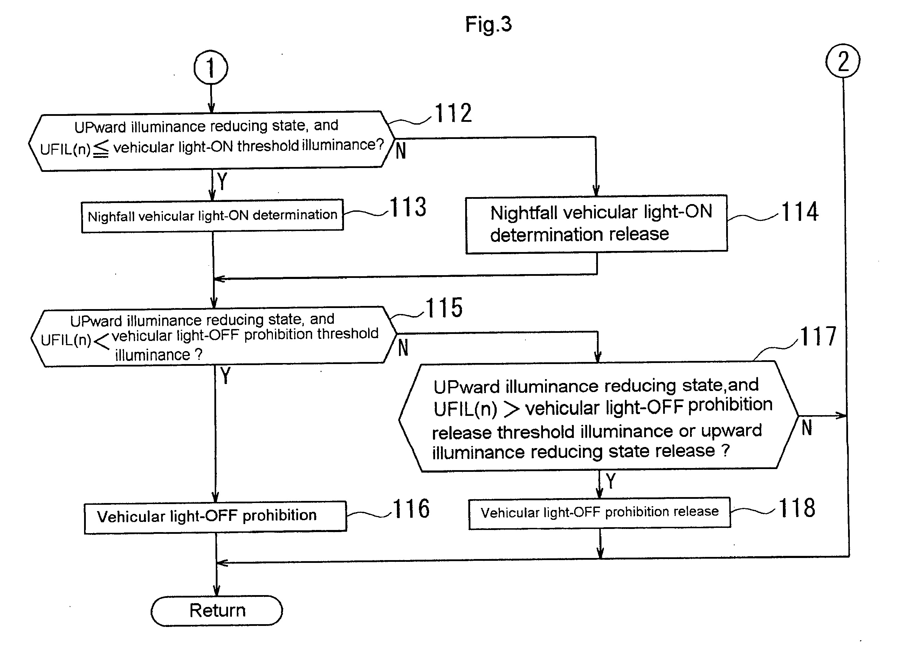

Hereinafter, the time zone determining processing will be explained. FIG. 2 and FIG. 3 are flow charts explaining the time zone determining processing to be executed in the vehicular light automatic control device 1.

In the time zone determining processing, in step 101 the sky determining component 43 determines whether or not the sky is detected, from output signals of the forward illuminance sensor 2 and the upward illuminance sensor 3. Specifically, based upon the illuminance data (forward illuminance Lf, upward illuminance Lu, and the respective average values Lf_Ave and Lu_Ave) stored in the storage component 41, presence/absence of the detection for each of tunnels, street lamps, and elevated bridges is determined. In a case where these factors are not detected, it is determined that the sky is detected.

In the embodiment, in a case where the light detected by the upward illuminance sensor 3 is artificial light, the tunnel or the street lamp is determined to be detected. When the average value Lf_Ave of the forward illuminance is higher than threshold illuminance Th0 for determining an OFF operation of a vehicular light and the average value Lu_Ave of the upward illuminance is lower than the threshold illuminance Th0 for determining the OFF operation of a vehicular light, the elevated bridge is determined to be detected.

When it is determined in step 101 that the sky is not detected (the tunnel, the street lamp, or the elevated bridge is detected), the time zone determining processing ends. When it is determined that the sky is detected, the process goes to processing of step 102.

In the vehicular light automatic control device 1 according to the embodiment, the time zone determining processing is executed for improving accuracy in the ON/OFF control of a vehicular light during a transient period between daytime and nighttime, such as nightfall or dawn. When the sky is not detected (in step 101 a determination of NO is made) as in the case where a vehicle travels in a tunnel or under a little bit long, elevated bridge, there is a possibility that it can not be appropriately determined whether or not the present time is in a transient period between daytime and nighttime. Therefore in this case, the present processing ends. It should be noted that, since the time zone determining processing is repeatedly executed, when the sky is detected in the present processing at the next and subsequent thereto, the process following step 102 is supposed to be executed.

In step 102 the time zone determining component 44 confirms whether or not the upward filtering illuminance UFIL (n) at the present time is calculated. In the vehicular light automatic control device 1 according to the embodiment, output signals (upward illuminance) from the upward illuminance sensor 3 are continuously input to the control device 4. The illuminance comparison component 42 in the control device 4 executes the noise elimination processing to the input output signal (upward illuminance) every predetermined time T1, and stores the upward filtering illuminance UFIL (n) obtained by the noise elimination processing in the storage component 41.

Therefore in a case where an elapse time after the upward filtering illuminance UFIL (n) is previously calculated is less than the predetermined time T1, the latest upward filtering illuminance UFIL (n) is not yet calculated at the present time.

Therefore in step 102, in a case where the upward filtering illuminance UFIL (n) is not calculated, the present processing ends for waiting for the upward filtering illuminance UFIL (n) to be calculated, and in a case where the upward filtering illuminance UFIL (n) is calculated, the process goes to step 103. It should be noted that in the following explanation, UFIL (n) means the upward filtering illuminance at the present time, and UFIL (n - 1) means the previously calculated upward filtering illuminance.

In the embodiment, the predetermined time T1 is a time length to be determined in accordance with the content of the noise elimination processing, and is basically set to a time during which an illuminance change at nightfall or at dawn can be confirmed. The noise elimination processing is executed for eliminating an influence of a temporal illuminance change due to the elevated bridge or the sunshine filtering through foliage from the output signal of the upward illuminance sensor 3. As described above, in the embodiment, the median filtering processing and the filtering processing using the maximum value/the minimum value are combined for execution of the noise elimination processing.

When the calculation of the upward filtering illuminance UFIL (n) is confirmed in step 102 (in step 102 a determination of YES is made), in step 103 it is determined whether or not the illuminance upward of a vehicle is illuminance corresponding to a time zone of daytime. Specifically the upward filtering illuminance UFIL (n) is compared with the threshold illuminance THIL1 for determining whether or not the present time is in a time zone of daytime. When the upward filtering illuminance UFIL (n) is equal to or more than the threshold illuminance THIL1 (UFIL (n) ≥ threshold illuminance THIL1), it is determined that the illuminance upward of the vehicle is the illuminance corresponding to the time zone of daytime (the present time is in the time zone of daytime), and the determination in step 103 is affirmed.

In this case, in step 104 release processing of an upward illuminance reducing state is executed. Specifically a flag, which shows a state where the illuminance upward of the vehicle is reducing, is cleared (upward illuminance reducing state flag). Therefore in a case where the upward illuminance reducing state flag is set in the previous time zone determining processing, the state (ON) is changed to the state (off) where the flag is not set. On the other hand, in a case where the upward illuminance reducing state flag is not set, the state (off) where the flag is not set continues to be maintained.

On the other hand, in step 103 when the upward filtering illuminance UFIL (n) is less than the threshold illuminance THIL1 (UFIL (n) < threshold illuminance THIL1), the determination in step 103 is denied, and the process goes to step 105.

Here, the case where the upward filtering illuminance UFIL (n) is less than the threshold illuminance THIL1 means that the illuminance upward of a vehicle is not the illuminance corresponding to a time zone of daytime, but is illuminance in a transient period between daytime and nighttime (time zone between daytime and nighttime) or in a time zone of nighttime.

In the embodiment, the threshold illuminance THIL1 is set to an illuminance value corresponding to brightness in the transient period between daytime and nighttime (illuminance value from a bright state of daytime to a point where nightfall starts or illuminance value from a dark state of nighttime to a point where dawn breaks), and an arbitrary value determined through collection of actual illuminance values is adopted as the threshold illuminance THIL1.

When the determination in step 103 is denied and it is determined that the present time is not in the time zone of daytime, the process in step 105 is executed for determining whether or not the present time is in a transient period between daytime and nighttime. Here, the transient period between daytime and nighttime includes both of nightfall from a bright state of daytime to a point where nightfall starts or daybreak from a dark state of nighttime to a point where nighttime starts to break. Therefore in step 105 it is determined whether or not the present time is daybreak based upon the upward filtering illuminance UFIL (n) at the present time and the upward filtering illuminance UFIL (n - 1) at the previous time.

Specifically in step 105 it is confirmed whether UFIL (n) > UFIL (n - 1) and THILSub3 ≤ UFIL (n) - UFIL (n - 1) ≤ THILSub4. In a case where this condition is met, it is determined that the present time is daybreak, and the determination in step 105 is affirmed.

Here, "UFIL (n) > UFIL (n - 1)" means that the upward filtering illuminance UFIL (n) calculated at the present time is larger than the upward filtering illuminance UFIL (n - 1) calculated at the previous time, and means that the illuminance upward of a vehicle is higher (brighter) than at the previous time. "UFIL(n)-UFIL(n - 1)" is a changing amount of the illuminance upward of a vehicle, and "THILSub3 is a changing amount of the illuminance value generated due to movement of the sun at dawn, and is the minimum changing amount per time T1 (the minimum illuminance changing value). "THILSub4 is a changing amount of the illuminance value generated due to movement of the sun at dawn, and is the maximum changing amount per time T1 (the maximum illuminance changing value). In the embodiment, arbitrary values determined through collection of actual illuminance values are set as THILSub3 and THILSub4.

When the determination in step 105 is affirmed, it means that the illuminance upward of a vehicle gradually brightens and the present time is dawn where it gradually brightens from a dark state of nighttime. In this case, in step 106 a value of a counter (upward illuminance reducing counter C) counting a reducing time of the upward illuminance is reduced by "1".

In next step 107, it is determined whether or not the value of the upward illuminance reducing counter C is a predetermined value (for example, 0). When it is equal to or less than the predetermined value (C ≤ 0) (in step 107 the determination is YES), the process goes to step 104, wherein the aforementioned release processing of the upward illuminance reducing state is executed.

On the other hand, when the value of the upward illuminance reducing counter C is larger than a predetermined value (for example, 0) (C > 0) (in step 107 the determination is NO), the process goes to step 112 to be described later.

When the determination in aforementioned step 105 is denied and it is determined that the present time is not dawn, in step 108 it is determined whether or not the present time is nightfall.

Specifically in step 108 it is confirmed whether UFIL (n) < UFIL (n - 1) and THILSub1 ≤ UFIL (n - 1) - UFIL (n) ≤ THILSub2. In a case where this condition is met, it is determined that the present time is nightfall, and the determination in step 108 is affirmed.

Here, "UFIL (n) < UFIL (n - 1)" means that the upward filtering illuminance UFIL (n) calculated at the present time is smaller than the upward filtering illuminance UFIL (n - 1) calculated at the previous time, and means that the illuminance upward of a vehicle is lower (darker) than at the previous time. "UFIL (n - 1) - UFIL (n) " is a changing amount of the illuminance upward of a vehicle, and THILSub1 is a changing amount of the illuminance value generated due to movement of the sun at nightfall, and is the minimum changing amount per time T1 (the minimum illuminance changing value). THILSub2 is a changing amount of the illuminance value generated due to movement of the sun at nightfall, and is the maximum changing amount per time T1 (the maximum illuminance changing value). In the embodiment, arbitrary values determined through collection of actual illuminance values are set as THILSub1 and THILSub2.

When the determination in step 108 is affirmed, it means that the illuminance upward of a vehicle becomes gradually dark and the present time is nightfall where it becomes gradually dark from a bright state of daytime. In this case, in step 109 a value of the counter (upward illuminance reducing counter C) counting a time during which the upward illuminance reduces is added by "1".

In next step 110, it is determined whether or not the value of the upward illuminance reducing counter C is a predetermined value a (a is an integral number larger than 0) or more. When the value of the upward illuminance reducing counter C is the predetermined value a or more (C ≥ a), in step 110 the determination is affirmed, and in step 111 upward illuimnance reducing state processing is executed. Specifically an upward illuminance reducing state flag, which shows a state where the illuminance upward of a vehicle is reducing, is set.

In the embodiment, for preventing the upward illuminance reducing state flag from being set in error in a case where the illuminance upward of the vehicle temporarily reduces, the upward illuminance reducing state flag is not set until the process in step 108 is sequentially affirmed by the predetermined number of times a or more (it is determined that it is nightfall) in the time zone determining processing to be repeatedly executed.

Therefore when the value of the upward illuminance reducing counter C is less than the predetermined value a (C < a) (the determination in step 110 is NO), the process in step 111 is skipped.

It should be noted that when the aforementioned determination in step 108 is denied, since the present time is not in a time zone of daytime or in a transient period between daytime and nighttime, it is in a time zone of nighttime. In this case, the process goes to step 112.

As shown in FIG. 3, in next step 112 the time zone determining component 44 performs a nightfall vehicular light-ON determination. Specifically in step 112 it is confirmed whether or not the upward illuminance is in an upward illuminance reducing state and upward filtering illuminance UFIL (n) at the present time < vehicular light-ON threshold illuminance Th1. In a case where this condition is met, the determination in step 112 is affirmed. Here, whether or not the upward illuminance is in the upward illuminance reducing state is determined based upon whether or not the upward illuminance reducing state flag is set. In a case where the upward illuminance reducing state flag is set, it is determined that the upward illuminance is in the upward illuminance reducing state. The vehicular light-ON threshold illuminance Th1 is threshold illuminance for vehicular light-ON for determining an ON operation for a vehicular light, is an arbitrary value determined through collection of actual illuminance values, and is obtained from the storage component 41.

When the process in step 112 is affirmed, in step 113 nightfall vehicular light-ON determining processing is executed. Specifically a flag (nightfall vehicular light-ON flag), which shows that the present time is nightfall and is in a state requiring ON of a vehicular light, is set.

On the other hand, when the process in step 112 is denied, in step 114 release processing of the nightfall vehicular light-ON determination is executed. Specifically in a case where the nightfall vehicular light-ON flag is set, this nightfall vehicular light-ON flag is cleared, and in a case where the nightfall vehicular light-ON flag is not set, a state (OFF state) where the flag is not set continues to be maintained.

In step 115 a vehicular light-OFF prohibition determination is executed for determining whether or not an OFF operation of a vehicular light is prohibited to continue the ON operation of the vehicular light. In step 115 it is confirmed whether or not the upward illuminance is in an upward illuminance reducing state and the upward filtering illuminance UFIL (n) at the present time < vehicular light-OFF prohibition threshold illuminance Th2. In a case where this condition is met, the determination instep 115 is affirmed. Here, whether or not the upward illuminance is in the upward illuminance reducing state is determined based upon whether or not the upward illuminance reducing state flag is set. The vehicular light-OFF prohibition threshold illuminance Th2 is threshold illuminance for vehicular light-OFF prohibition determination for determining OFF-prohibition for a vehicular light, is an arbitrary value determined through collection of actual illuminance values, and is obtained from the storage component 41.

In the embodiment, the vehicular light-OFF prohibition threshold illuminance Th2 is set to a larger value (brighter value) by a predetermined value α than a threshold (vehicular light-OFF threshold illuminance) Th0 for determining an OFF operation of a vehicular light (Th2 = Th0 + α). This is because a determination delay for vehicular light-OFF prohibition is not generated by setting the vehicular light-OFF prohibition threshold illuminance Th2 to brighter illuminance than the threshold illuminance Th0 for determining an OFF operation of a vehicular light. It should be noted that α is a changing amount of an illuminance value generated due to movement of the sun at nightfall, and preferably a value approximate to an average value of a changing amount per time T1.

When the determination in step 115 is affirmed, in step 116 the vehicular light-OFF prohibition processing is executed and a flag prohibiting the OFF operation of a vehicular light (vehicular light-OFF prohibition flag) is set.

On the other hand, when the determination in step 115 is denied, in step 117 it is determined whether or not the vehicular light-OFF prohibition is released. Specifically in step 117 it is confirmed whether or not the upward illuminance is in an upward illuminance reducing state and the upward filtering illuminance UFIL (n) at the present time > vehicular light-OFF prohibition release threshold illuminance Th3 or the upward illuminance reducing state is released. In a case where this condition is met, the determination in step 117 is affirmed. Here, whether or not the upward illuminance is in the upward illuminance reducing state or whether or not the upward illuminance reducing state is released is determined based upon whether or not the upward illuminance reducing state flag is set. The vehicular light-OFF prohibition release threshold illuminance Th3 is threshold illuminance for vehicular light-OFF prohibition release for determining release of off-prohibition for a vehicular light, is an arbitrary value determined through collection of actual illuminance values, and is obtained from the storage component 41.

In the embodiment, the vehicular light-OFF prohibition release threshold illuminance Th3 is set to a larger value (brighter value) by a predetermined value β than a threshold Th0 for determining an OFF operation of a vehicular light (Th3 = Th0 + β). This is because the vehicular light-OFF prohibition is not released in error by setting the vehicular light-OFF prohibition release threshold illuminance Th3 to brighter illuminance than the threshold illuminance Th0 for determining an OFF operation of a vehicular light. It should be noted that β is a changing amount of an illuminance value generated due to movement of the sun at dawn, and preferably a value approximate to an average value of a changing amount per time T1.

When the determination in step 117 is affirmed, the present time is a dawn time or a time except for nighttime (daytime). In this case, the process goes to step 118, wherein the vehicular light-OFF prohibition is released. Specifically the vehicular light-OFF prohibition flag is cleared. When the determination in step 117 is denied, the time zone determining processing terminates.

Therefore the presence/absence of the set of each flag (upward illuminance reducing state flag, nightfall vehicular light-ON flag, and vehicular light-OFF prohibition flag) is outputted to the automatic control command generating component 45 as the determination result.

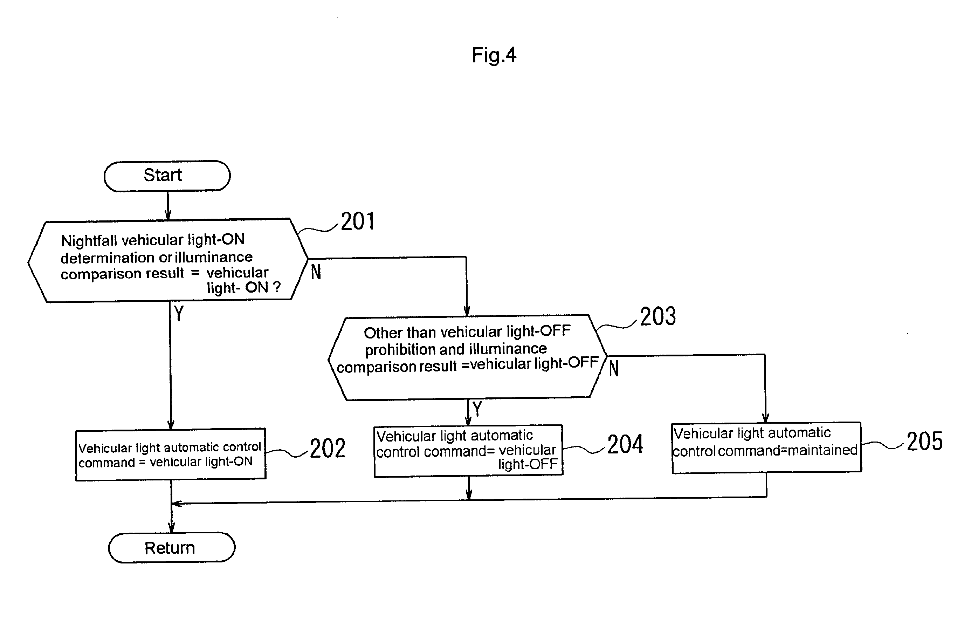

Next, the processing in the automatic control command generating component 45 will be explained. FIG. 4 is a flow chart showing vehicular light automatic control command generating processing.

In the vehicular light automatic control command generating processing, it is determined whether or not a vehicular light switches on based upon an illuminance comparison result input from the illuminance comparison component 42 and a determination result input from the time zone determining component 44. Specifically in step 201 it is confirmed whether or not the requirement for setting a vehicular light to an ON-state is met. Specifically it is confirmed whether at least one of a nightfall vehicular light-ON flag and a vehicular light-ON flag is set. In a case where any one of them is set, the determination in step 201 is affirmed.

Here, the nightfall vehicular light-ON flag is a flag set as a result of the processing in the time zone determining component 44, and the vehicular light-ON flag is a flag set in a case where the illuminance comparison result shows an ON operation of a vehicular light as a result of the processing in the illuminance comparison component 42.

When the determination in step 201 is affirmed, in step 202 a command of setting a vehicular light to an ON-state (vehicular light automatic control command: ON) is generated, which is afterwards outputted to the vehicular light control unit 5.

On the other hand, when the determination in step 201 is denied, it is confirmed whether or not the requirement for setting a vehicular light to an OFF-state (vehicular light-OFF prohibition flag: OFF and vehicular light-ON flag: OFF) is met. In a case where both the flags are not set (in a case where the flags are OFF), the determination in step 203 is affirmed.

When the determination in step 203 is affirmed, in step 204 a command of setting a vehicular light to an OFF-state (vehicular light automatic control command: OFF) is generated, which is afterwards outputted to the vehicular light control unit 5.

On the other hand, when the determination in step 203 is denied, in step 205 a command of maintaining an ON-state of a vehicular light (vehicular light automatic control command: maintained) is generated, which is afterwards outputted to the vehicular light control unit 5.

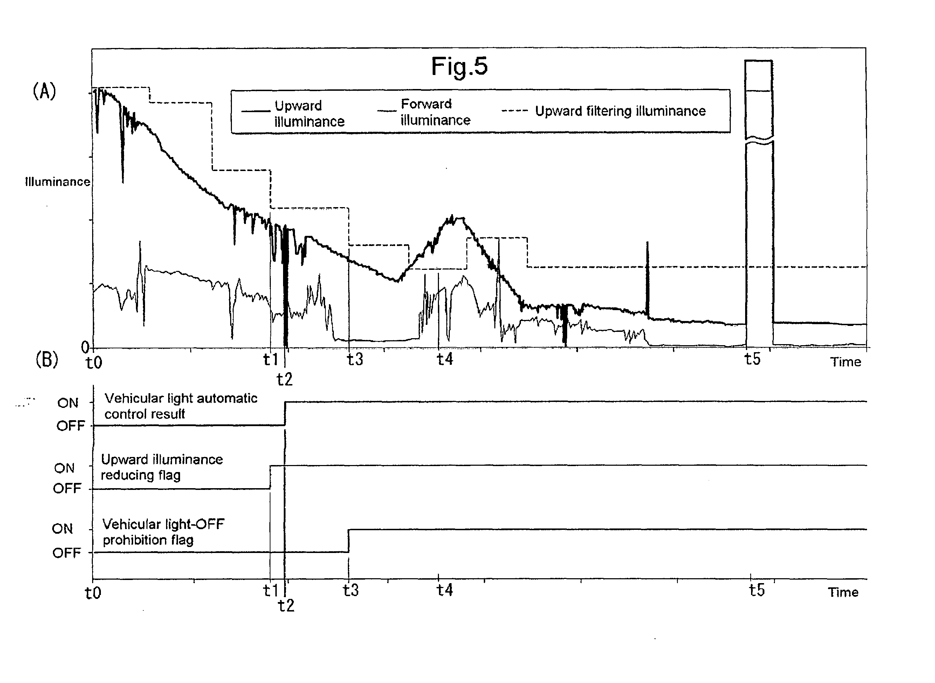

Here, the above processing will be explained by being applied to a case where a vehicle travels in a situation where the illuminance upward of a vehicle at nightfall gradually reduces. FIG. 5A is a graph showing a change of each of upward illuminance and forward illuminance when a vehicle travels at nightfall, and FIG. 5B is a graph showing a result of the vehicular light automatic control.

When a vehicle travels at nightfall, the vehicular surroundings become gradually dark and afterwards the upward filtering illuminance UFIL (n) becomes lower than the threshold illuminance THIL1 for determining whether or not the present time is in a time zone of daytime (FIG. 2: in step 103 the determination is NO). Then at nightfall the vehicular surroundings are becoming gradually dark, and at least the requirement of "UFIL (n) > UFIL (n - 1)" is not met. Therefore the determination in step 105 is denied (in step 105, the determination is NO), and the process in step 108 is executed.

In step 108 in a case where it is determined whether or not the present time is a nightfall time and it is determined that the present time is the nightfall time, in step 109 a value of the counter (upward illuminance reducing counter C) showing the frequency that the present time is determined to be the nightfall time is added. In the embodiment, the time zone determining processing (FIG. 2 and FIG. 3) is repeatedly executed, and the frequency that the present time is determined to be the nightfall time will reach a predetermined frequency a soon or later (determination in step 110 is YES). Then the upward illuminance reducing state flag, which shows a state where the illuminance upward of a vehicle is reducing, is set (step 111).

In a case of FIG. 5A, after time t0, the upward filtering illuminance UFIL gradually reduces, and at time t1 the frequency that the present time is determined to be the nightfall time reaches the predetermined frequency a, and the upward illuminance reducing state flag is set.

Also after the upward illuminance reducing state flag is set, since the illuminance in the vehicular surroundings is gradually darkened, soon or later the upward filtering illuminance UFIL (n) will be lower than the vehicular light-ON threshold illuminance Th1. Then the process in step 112 (refer to FIG. 3) is affirmed, and in step 113 the nightfall vehicular light-ON flag will be set.

In the embodiment, the illuminance comparison processing is executed in the illuminance comparison component 42 in parallel to the time zone determining processing in the time zone determining component 44, and the determination on an ON/OFF operation of a vehicular light based upon the illuminance comparison result is executed in the automatic control command generating component. In a case of FIG. 5A, at time t2 after t1 where the upward illuminance reducing state flag is set, the ON operation of a vehicular light is determined based upon the illuminance comparison result.

When the nightfall vehicular light-ON flag is set in the time zone determining processing, in step 115 it is confirmed whether or not the upward filtering illuminance UFIL (n) is smaller than a vehicular light-OFF prohibition threshold illuminance Th2. In a case where it is smaller, a vehicular light-OFF prohibition flag for prohibiting an OFF operation of a vehicular light is set. Since the vehicular light-OFF prohibition threshold illuminance Th2 is set as a value (brighter) larger than the vehicular light-ON prohibition threshold illuminance Th1, substantially as soon as the nightfall vehicular light-ON flag is set, the vehicular light-OFF prohibition flag is set.

In a case of FIG. 5A, at time t1 where the upward illuminance reducing state flag is set, the upward filtering illuminance UFIL is larger than the vehicular light-ON threshold illuminance Th1 (UFIL > Th1), and at time t3 where the upward filtering illuminance is calculated at the next, the upward filtering illuminance UFIL is equal to or smaller than the vehicular light-ON threshold illuminance Th1 (UFIL ≤ Th1). As a result, at time t3 the determination in step 112 is affirmed and the nightfall vehicular light-ON flag and the vehicular light-OFF prohibition flag are set (step 113 and step 116).

Therefore, after time t3 where the vehicular light-OFF prohibition flag is set, for example at time 4, even in a case where the upward illuminance changes toward a brighter state due to an influence of clouds or the like, and the forward illuminance Lf and the upward illuminance Lu are temporarily larger than a threshold illuminance for determining an OFF operation of a vehicular light, since the OFF operation of a vehicular light is prohibited, the ON-state of the vehicular light is maintained.

Further, for example, even in a case where at time t5 the illuminance in the vehicular surroundings is rapidly brightened due to an influence of multiple illuminations such as neon and therefore the forward illuminance Lf and the upward illuminance Lu become temporarily larger than the threshold illuminance for determining the OFF operation of a vehicular light, since the OFF operation of the vehicular light is prohibited, the ON-state of the vehicular light is maintained.

It should be noted that in the embodiment, when the sky is not detected (determination in step 101 is NO), the time zone determining processing is not executed. This is because when the sky is not detected, there is a possibility that surrounding structures or illuminance of shop illuminations and the like may have an influence on the determination of a time zone. Therefore in FIG. 5A, a time interval by which the upward filtering illuminance UFIL is calculated is calculated every time T1 on average. Thereby accuracy in determination of a time zone improves.

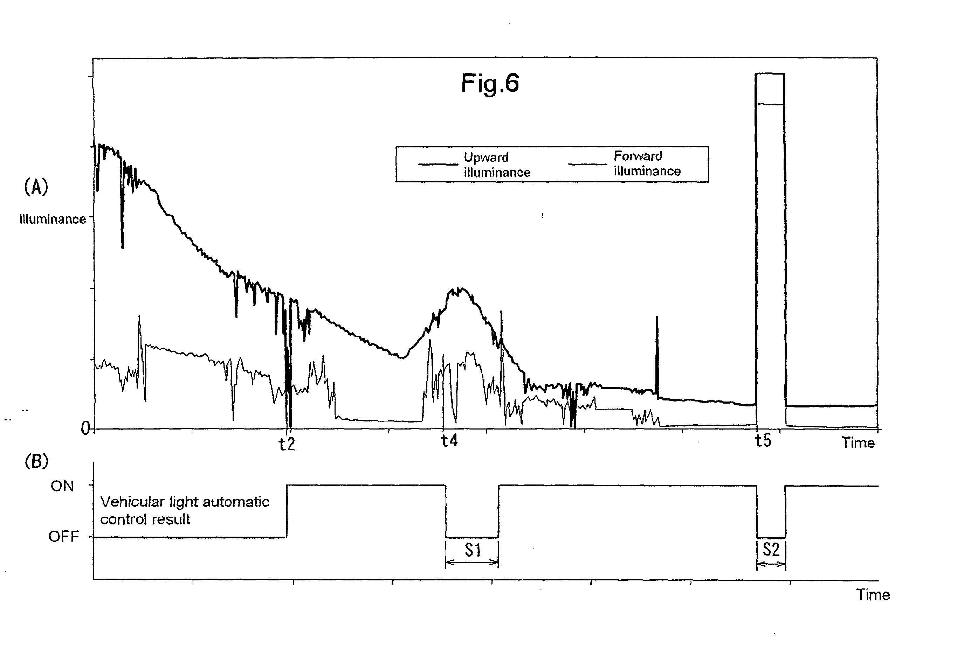

FIG. 6A and FIG. 6B are diagrams explaining a change of each of upward illuminance and forward illuminance and a result of vehicular light automatic control when a vehicle travels at nightfall in a conventional example where the time zone determining processing according to the embodiment is not executed.

In a case of the conventional example, since the determination on whether or not the preset time is in a time zone of nightfall is not made, when the illuminance forward and upward of a vehicle is lower than threshold illuminance for determining an ON operation of a vehicular light, the vehicular light is made to be in an ON-state (time t2). After the vehicular light is set to be in the ON-state, for example, at time t4 the upward illuminance is changed toward a brighter state due to an influence of clouds or the like, and each of the forward illuminance Lf and the upward illuminance Lu of a vehicle is temporarily larger than a threshold illuminance for determining an OFF operation of a vehicular light. In this case, the vehicular light is made to be in an OFF-state, the vehicular light results in being maintained in the OFF-state until the illuminance forward and the upward of a vehicle becomes again lower than the threshold illuminance for determining the ON operation of a vehicular light (period S1).

Further, for example, when at time t5 the illuminance in the vehicular surroundings is rapidly brightened due to an influence of multiple illuminations such as neon and therefore the forward illuminance Lf and the upward illuminance Lu become temporarily larger than the threshold illuminance for determining the OFF operation of a vehicular light, also in this case, the vehicular light is made to be in an OFF-state and the OFF-state of the vehicular light is maintained (period S2).

Therefore in the vehicular light automatic control device 1 according to the embodiment, for example, in a case where after vehicular light-ON at nightfall, the detection illuminance in the vehicular surroundings temporarily exceeds the threshold illuminance requiring an OFF operation of a vehicular light due to an influence of artificial light of illuminations and the like or clouds, it can be preferably prevented to switch off a vehicular light. Therefore there can be reduced a feeling of strangeness which a driver has in control of the ON/OFF operation of a vehicular light in a particular situation.

Here, the forward illuminance sensor 2 in the embodiment corresponds to a forward illumination detecting unit in the present invention. The upward illuminance sensor 3 corresponds to an upward illuminance detecting unit in the present invention. The automatic control command generating component 45 in the embodiment corresponds to a vehicular light-ON/OFF control unit in the present invention. The sky determining component 43 in the embodiment corresponds to a determining unit in the present invention. The time zone determining component 44 in the embodiment corresponds to a time zone determining unit in the present invention.

As described above, according to the embodiment, the vehicular light automatic control device 1 comprises the forward illuminance sensor 2 to receive light from the forward side of a vehicle for detecting the illuminance forward of a vehicle, the upward illuminance sensor 3 to receive light from the upward side of the vehicle for detecting the illuminance upward of the vehicle, and the control unit 4 configured to control the ON/OFF operation of the vehicular light based upon the illuminance forward of the vehicle and the illuminance upward of the vehicle, further comprising:
the time zone determining component 44 configured to determine in which time zone of nightfall, dawn and daytime the present time is, based upon the illuminance Lu upward of the vehicle, wherein
when it is determined that the present time is in the time zone of nightfall, the control unit 4 prohibits an OFF operation of the vehicular light afterwards, and when it is determined that the present time is in the time zone of dawn or daytime, the control unit 4 releases the prohibition of the OFF operation of the vehicular light.

As configured above, when it is determined that the present time is in the time zone of nightfall, the OFF operation of the vehicular light afterwards is prohibited. Therefore even if the detection illuminance in the vehicular surroundings temporarily exceeds the threshold illuminance for determining the OFF operation of the vehicular light, it prevents the vehicular light from switching off. In consequence, for example, after vehicular light-ON at nightfall, when the detection illumination in the vehicular surroundings temporarily exceeds the threshold illuminance for vehicular light-OFF due to influences of artificial light such as an illumination or clouds, the vehicular light can be prevented from switching off. Therefore a feeling of strangeness which a driver has in control of the ON/OFF operation of a vehicular light in a particular situation can be reduced.

The vehicular light automatic control device 1 further comprises the sky determining component 43 for determining whether or not the sky is detected based upon the illuminance Lf forward of the vehicle and the illuminance Lu upward of the vehicle, wherein the time zone determining component 44 executes the determination of a time zone when the sky is detected by the sky determining component 43, and the sky determining component 43 determines presence/absence of each of a tunnel, a street lamp , and an elevated bridge based upon the illuminance Lf forward of the vehicle and the illuminance Lu upward of the vehicle, wherein in a case where they are not detected, it is determined that the sky is detected.

When the upward illuminance sensor 3 does not receive natural light from the sky, it can not be accurately determined to which time zone of nightfall, dawn and daytime the present time corresponds. Therefore in a situation where it can be determined that the upward illuminance sensor 3 does not receive natural light from the sky, for example, when the sky is not detected as in a case where a vehicle travels in a tunnel or under a long elevated bridge or as in a case where a vehicle receives artificial light from a street lamp, there is a possibility that the time zone may not be accurately detected. Therefore by determining the time zone when the sky is detected, accuracy in the determination can improve.

The time zone determining component 44 determines that the present time is in a time zone of nightfall in a case where the illuminance upward of a vehicle reduces with time, and the automatic control command generating component 45 in the control unit 4, when the illuminance upward of a vehicle is equal to or less than threshold illuminance Th1 for vehicular light-ON for determining an ON operation of a vehicular light in a case where it is determined that the present time is in the time zone of nightfall, switches on the vehicular light regardless of the illuminance forward of the vehicle.

Since this configuration prevents the vehicular light from unnaturally switching on/off in the time zone of nightfall, a feeling of strangeness which a driver has in the control in the ON/OFF operation of the vehicular light in a particular situation can be reduced.

The automatic control command generating component 45 is configured to switch off a vehicular light in a case where each of the illuminance upward of a vehicle and the illuminance forward of the vehicle is equal to or more than the threshold illuminance Th0 for vehicular light-OFF for determining an OFF operation of the vehicular light, and also the OFF operation of the vehicular light is not prohibited.

Since this configuration prevents the vehicular light from unnaturally switching on/off in a time zone of nightfall or dawn, a feeling of strangeness which a driver has in the control in the ON/OFF operation of the vehicular light in a particular situation can be reduced.

The time zone determining component 44 determines (1) that the present time is in a time zone of daytime when the illuminance upward of a vehicle is equal to or more than the threshold illuminance THIL1 for determining the time zone of daytime, determines (2) that the present time is in a time zone of nightfall when the illuminance upward of a vehicle is less than the threshold illuminance Th2 for vehicular light-OFF prohibition determination for determining OFF prohibition of a vehicular light in a case where the illuminance upward of the vehicle reduces with time, and determines (3) that the present time is in a time zone of dawn when the illuminance upward of a vehicle is larger than the threshold illuminance Th3 for vehicular light-OFF prohibition release for determining release of the OFF prohibition of a vehicular light in a case where the illuminance upward of the vehicle increases with time, wherein each of the threshold illuminance Th2 for vehicular light-OFF prohibition determination and the threshold illuminance Th3 for vehicular light-OFF prohibition release is set to brighter illuminance than the threshold illuminance Th0 for determining the OFF operation of a vehicular light.

This configuration can appropriately prevent occurrence of determination delay in the vehicular light-OFF prohibition.

At least the illuminance upward of the vehicle is an illuminance value after the noise elimination processing is executed, and the noise elimination processing includes the over-noise elimination processing for executing the median filtering processing for each first time longer than a predetermined sampling time to the illuminance data obtained for every predetermined sampling time from the output signal of the upward illuminance detecting sensor 3, the under-noise processing for calculating the maximum value for each second time longer than the first time in regard to the illuminance data having been subjected to the over-noise elimination processing, and the processing for calculating the minimum value for each third time longer than the second time in the illumination data having been subjected to the under-noise processing.

According to this configuration, by this noise elimination processing, there can be obtained the illuminance data (upward filtering illuminance)in which factors causing a temporal change of the illuminance which can be interruption of detecting an illuminance change due to nightfall or dawn, such as structures, shop illuminations and circuit noises in the surroundings during vehicle traveling, are eliminated, and variations in the illuminance data due to noises can be suppressed to appropriately prevent an erroneous determination in determination of the ON/OFF operation of the vehicular light.

The embodiment exemplifies a case where the processing of signals input from the forward illuminance sensor 2 and the upward illuminance sensor 3 is executed in the illuminance comparison component 42. However, the signals from the forward illuminance sensor 2 and the upward illuminance sensor 3 may be input also to the sky determining component 43 and the time zone determining component 44, so that the processing of the signal may be executed in each of the illuminance comparison component 42, the sky determining component 43 and the time zone determining component 44.

The embodiment exemplifies a case where the sky determining component 43 determines whether or not the sky is detected based upon the illuminance data (forward illuminance Lf and upward illuminance Lu) stored in the storage component 41. However, this determination may be made based upon the illuminance data (forward filtering illuminance) subjected to the noise elimination processing. In this case, the time zone is determined based upon illuminance data (upward filtering illuminance) in which factors causing a temporal change of the illuminance which can be interruption of detecting an illuminance change due to nightfall or dawn are eliminated. Therefore the determination accuracy on the time zone further improves.

Further, by using an optical lens or an optical filter, the light received by the upward illuminance sensor 3 may have a wavelength band (380 to 480nm) closer to a blue color.

A cloud reflects light of a wavelength in an infrared band, and therefore by making a wavelength band of the light received by the upward illuminance sensor 3 to a wavelength band closer to a blue color, it can be appropriately prevented for the upward illuminance sensor 3 to receive the light reflected by the cloud. Since this configuration can prevent the determination on whether or not the present time is in a time zone of nightfall or the determination on an ON/OFF operation of a vehicular light from being influenced by the cloud, the determination on the ON prohibition of a vehicular light or the ON/OFF operation of a vehicular light can be more appropriately made.

In addition, a light-receiving part of the upward illuminance sensor 3 may be configured of a wide-angle lens. In this case, since a light incident range (visible angle) of the upward illuminance sensor 3 can be widened to relatively reduce a light-receiving area of a noise light source locally generated to be small, the influence of the noise can be appropriately suppressed.

The embodiment exemplifies a case where the control target of vehicular light-ON/OFF based upon the illuminance data is a head vehicular light, but the control target may be at least one of the small vehicular light and the head vehicular light mounted on a vehicle. In this case, by setting threshold illuminance for small vehicular light and threshold illuminance for head vehicular light to each aforementioned threshold illuminance, the ON/OFF control of the vehicular light can be more finely performed in accordance with driving conditions of a vehicle.

The embodiment exemplifies a case where the time zone determining processing ends in a case where any of a tunnel, a street lamp, and an elevated bridge is detected in the sky determining component 43, but in a case where a predetermined time elapses or in a case where a vehicle travels by a predetermined distance after any of a tunnel, a street lamp, and an elevated bridge is detected, a determination on presence/absence of detection of a tunnel, a street lamp, and an elevated bridge may be again made. In a case where a vehicle travels, a situation in the vehicular surroundings also changes from moment to moment. Therefore since the determination on the ON/OFF operation of a vehicular light can be more finely made with this configuration, a feeling of strangeness which a driver has in the control in the ON/OFF operation of the vehicular light in a particular situation can be reduced.

The embodiment exemplifies a case where the OFF operation of a vehicular light is prohibited in a case it is determined that the present time is in a time zone of nightfall, but, for example, in a case where it is determined that the present time is in a time zone of dawn, the ON operation of a vehicular light may be prohibited.

In a case where the present time is in a time zone of dawn, the illuminance upward of a vehicle is gradually brightened. Therefore, when the illuminance upward of the vehicle is larger than the threshold illuminance for determining an OFF operation of a vehicular light, the vehicular light switches off. When the illuminance upward of the vehicle temporarily reduces afterwards and the vehicular light switches on, a driver may possibly have a feeling of strangeness to the ON/OFF operation of a vehicular light. Therefore in a case where it is determined that the present time is in a time zone of dawn, once the vehicular light switches off, the ON operation of a vehicular light may be prohibited until a state where the illuminance upward of the vehicle becomes larger than the threshold illuminance for determining the ON operation of a vehicular light lasts for a predetermined time or until the illuminance upward of the vehicle becomes larger than the threshold illuminance for determining daytime.

While only the selected embodiment has been chosen to illustrate the present invention, it will be apparent to those skilled in the art from this disclosure that various changes and modifications can be made therein without departing from the scope of the invention as defined in the appended claims. Furthermore, the foregoing description of the embodiment according to the present invention is provided for illustration only, and not for the purpose of limiting the invention as defined by the appended claims and their equivalents.

### Description of Reference Signs

- 1: Vehicular light automatic control device
- 2: Forward illuminance sensor (forward illuminance detectin gunit)
- 3: Upward illuminance sensor (upward illuminance detecting unit)
- 4: Control unit (vehicular light-ON/OFF control unit)
- 5: Vehicular light control unit
- 41: Storage component
- 42: Illuminance comparison component
- 43: Sky determining component (determining unit)
- 44: Time zone determining component (time zone determinin gunit)
- 45: Automatic control command generating component
- C: Upward illuminance reducing counter
- Lf: Forward illuminance
- Lu: Upward illuminance
- Th0: Vehicular light-OFF threshold illuminance
- Th1: Vehicular light-ON threshold illuminance
- Th2: Vehicular light-OFF prohibition threshold illuminance
- Th3: Vehicular light-OFF prohibition release threshold illuminance
- ThA: Threshold illuminance
- THIL1: Threshold illuminance
- UFIL: Upward filtering illuminance

## Claims

1. A vehicular light automatic control device comprising:
a forward illuminance detecting unit (2) configured to receive light from the forward side of a vehicle for detecting illuminance forward of the vehicle;
an upward illuminance detecting unit (3) configured to receive light from the upward side of the vehicle for detecting illuminance upward of the vehicle; and
a vehicular light ON/OFF control unit (4) configured to control an ON/OFF operation of a vehicular light based upon the illuminance forward (Lf) of the vehicle and the illuminance upward (Lu) of the vehicle, further comprising:
a time zone determining unit (44) configured to determine whether or not a present time is in a time zone of nightfall based upon the illuminance upward of the vehicle,
wherein
when the time zone is determined as the nightfall, the vehicular light ON/OFF control unit (4) prohibits the OFF operation of the vehicular light afterwards.

2. A vehicular light automatic control device according to claim 1, further comprising:
a determining unit (43) configured to determine whether or not the sky is detected based upon the illuminance forward of the vehicle and the illuminance upward of the vehicle, wherein
the time zone determining unit (44) executes a determination on whether or not the present time is in a time zone of nightfall when the sky is detected by the determining unit.

3. A vehicular light automatic control device according to claim 2, wherein
the determining unit (43) determines presence/absence of each of a tunnel, a street lamp, and an elevated bridge based upon the illuminance forward of the vehicle and the illuminance upward of the vehicle, and in a case where they are not detected, determines that the sky is detected.

4. A vehicular light automatic control device according to any of claims 1 to 3, wherein
the time zone determining unit (44) further determines whether the present time is in a time zone of dawn or daytime, and
the vehicular light-ON/OFF control unit (4) releases the prohibition of the OFF operation of the vehicular light when it is determined that the present time is in the time zone of dawn or daytime.

5. A vehicular light automatic control device according to any of claims 1 to 4, wherein
the time zone determining unit (44) determines that the present time is in the time zone of nightfall in a case where the illuminance upward of the vehicle reduces with time, and
the vehicular light-ON/OFF control unit (4), when the illuminance upward of the vehicle is equal to or less than threshold illuminance for vehicular light-ON for determining an ON operation of a vehicular light in a case where it is determined that the present time is in the time zone of nightfall, switches on the vehicular light regardless of the illuminance forward of the vehicle.

6. A vehicular light automatic control device according to any of claims 1 to 5, wherein
the vehicular light-ON/OFF control unit switches off the vehicular light in a case where each of the illuminance upward of the vehicle and the illuminance forward of the vehicle is equal to or more than threshold illuminance for vehicular light-OFF for determining the OFF operation of the vehicular light and the OFF operation of the vehicular light is not prohibited.

7. A vehicular light automatic control device according to any of claims 1 to 6, wherein
the time zone determining unit (44) determines that the present time is in the time zone of nightfall when the illuminance upward of the vehicle is less than threshold illuminance for vehicular light-OFF prohibition determination for determining OFF prohibition of the vehicular light in a case where the illuminance upward of the vehicle reduces with time, and
the threshold illuminance for vehicular light-OFF prohibition determination is larger than the threshold illuminance for vehicular light-OFF.

8. A vehicular light automatic control device according to any of claims 1 to 7, wherein
the time zone determining unit (44) determines that the present time is in the time zone of dawn when the illuminance upward of the vehicle is larger than threshold illuminance for vehicular light-OFF prohibition release for determining release of the OFF prohibition of the vehicular light in a case where the illuminance upward of the vehicle increases with time, and
the threshold illuminance for vehicular light-OFF prohibition release is larger than the threshold illuminance for vehicular light-OFF.

9. A vehicular light automatic control device according to any of claims 1 to 8, wherein
the time zone determining unit (44) determines that the present time is in a time zone of daytime when the illuminance upward of the vehicle is larger than threshold illuminance for determining the time zone of daytime.

10. A vehicular light automatic control device according to any of claims 1 to 9, wherein
at least the illuminance upward of the vehicle is an illuminance value after the noise elimination processing is executed, and
the noise elimination processing includes:
over-noise elimination processing for executing median filtering processing for each first time longer than a predetermined sampling time to illuminance data obtained for the each predetermined sampling time from an output signal of the upward illuminance detecting unit;
under-noise processing for calculating the maximum value for each second time longer than the first time in regard to the illuminance data subjected to the over-noise elimination processing; and
processing for calculating the minimum value for each third time longer than the second time subjected to the under-noise processing.

11. A vehicular light automatic control device according to any of claims 1 to 10, wherein
light received by the upward illuminance detecting unit (3) has a wavelength band of 380 to 480nm.

12. A vehicular light automatic control device according to any of claims 1 to 11, wherein
a light-receiving part of the upward illuminance detecting unit (3) is formed of a wide-angle lens.

13. A vehicular light automatic control device according to any of claims 1 to 12, wherein
a control target of the vehicular light automatic control device includes at least one of a small vehicular light and a head vehicular light mounted on the vehicle, and
threshold illuminance for the small vehicular light and threshold illuminance for the head vehicular light are respectively set to the threshold illuminance.

14. A vehicular light automatic control device according to claim 3, wherein
the determining unit (43), when a predetermined time elapses or a vehicle travels by a predetermined distance after any of a tunnel, a street lamp, and an elevated bridge is detected, again makes a determination on presence/absence of detection of a tunnel, a street lamp, and an elevated bridge.
